# FASCICULE DE BREVET EUROPEEN

(11) **EP 1 347 592 B1**
(45) Date de publication et mention de la délivrance du brevet: **30.04.2014**
(21) Numéro de dépôt: 03290721.4
(22) Date de dépôt: 21.03.2003
(51) Int. Cl.: H04J 14/02, H04L 12/28

(54) **Réseau de télécommunications optiques de type métropolitain comprenant un coeur de type en anneau**
Metropolitan-Kommunikationsnetzwerk mit einem Ring-Typ-Kern
Metropolitan optical telecommunications network comprising a ring-type core

(30) Priorité: 21.03.2002 FR 0203550
(43) Date de publication de la demande: 24.09.2003
(73) Titulaire: Alcatel Lucent, 75007 Paris (FR)
(72) Inventeur: Dorgeuille, François, 75014 Paris (FR); Noirie, Ludovic, 91620 Nozay (FR); Artigue, Claude, 92340 Bourg la Reine (FR); Jourdan, Amaury, 92310 Sèvres (FR)
(74) Mandataire: Sciaux, Edmond

(56) Documents cités:
- EP-A- 0 763 909
- EP-A1- 0 687 085
- DE-A- 19 936 421
- FR-A- 2 756 442
- US-A- 6 084 694
- JOHANSSON S: "TRANSPORT NETWORK INVOLVING A RECONFIGURABLE WDM NETWORK LAYER - A EUROPEAN DEMONSTRATION" JOURNAL OF LIGHTWAVE TECHNOLOGY, IEEE. NEW YORK, US, vol. 14, no. 6, 1 juin 1996 (1996-06-01), pages 1341-1348, XP000598537 ISSN: 0733-8724
- MARK KUZNETSOV ET AL: "A Next-Generation Optical Regional Access Network", IEEE COMMUNICATIONS MAGAZINE, IEEE SERVICE CENTER, PISCATAWAY, US, vol. 38, no. 1, 1 January 2000 (2000-01-01), pages 66-72, XP011091214, ISSN: 0163-6804
- BERTHELON L ET AL: "Towards photonic networking: Experimental demonstration of a reconfigurable survivable WDM ring network", GLOBAL TELECOMMUNICATIONS CONFERENCE, 1996. GLOBECOM '96. 'COMMUNICATI ONS: THE KEY TO GLOBAL PROSPERITY LONDON, UK 18-22 NOV. 1996, NEW YORK, NY, USA,IEEE, US, vol. 1, 18 November 1996 (1996-11-18), pages 311-315, XP010220371, DOI: 10.1109/GLOCOM.1996.594380 ISBN: 978-0-7803-3336-9

## Description

La présente invention se rapporte au domaine des réseaux de télécommunications optiques et décrit plus particulièrement un réseau de télécommunications optiques, de type métropolitain, comprenant un coeur en anneau.

De manière connue, des réseaux tels que certains réseaux métropolitains couvrant des zones géographiques assez importantes et permettant l'interconnexion de réseaux locaux par exemple situés à moins de 100 km les uns des autres, présentent une architecture de type en anneau.

Le document intitulé «A scalable transparent waveband-based optical metropolitan network», Jean-Paul FAURE et autres, ECOC'2001, 30 Septembre 2001 - 4 Octobre 2001, 'Postdeadline Paper' A.1.10, Proceedings Vol. 6, divulgue un réseau métropolitain de télécommunications optiques comprenant un coeur en anneau formé d'une fibre optique pour le transport de signaux optiques dans laquelle est insérée un concentrateur de trafic ainsi que des noeuds principaux de communication. Chaque noeud principal de communication relie le réseau métropolitain à un réseau local, ce dernier comportant une pluralité de noeuds dits d'accès reliés à des stations.

La fonction essentielle du concentrateur de trafic consiste à distribuer à l'intérieur du réseau métropolitain des signaux optiques modulés et multiplexés en longueurs d'onde issus d'un autre réseau dit fédérateur (ou « backbone »), ainsi qu'à transmettre de tels signaux à ce réseau fédérateur.

Chaque noeud de communication principal comprend un multiplexeur à insertion-extraction de bandes de longueurs d'onde (Waveband Optical Add and Drop Multiplexer en anglais). Ce multiplexeur est apte à dériver une partie du trafic du coeur (sélection d'une ou de plusieurs bandes de longueurs d'onde) vers un anneau secondaire, sur lequel sont insérés des noeuds d'accès. Chaque noeud d'accès est relié à des réseaux locaux. Ce multiplexeur est apte aussi à insérer du trafic dans la fibre du coeur, en direction du concentrateur (ajout d'une ou de plusieurs bandes de longueurs d'onde) ; tout en laissant transiter l'ensemble des longueurs d'onde des signaux multiplexés circulant dans le coeur.

Dans ce qui suit, on appellera « trafic inter-réseaux » le trafic entre deux réseaux métropolitains reliés à un même réseau fédérateur. On appellera « trafic intra-réseau » le trafic à l'intérieur d'un même réseau métropolitain, c'est-à-dire le trafic d'informations émises par un noeud d'accès et destinées à un autre noeud d'accès relié à un même anneau secondaire ou à un autre anneau secondaire du même réseau métropolitain. Jusqu'à maintenant ce trafic a été considéré comme négligeable, et sa gestion n'est donc pas optimisée. En effet, afin d'assurer la bonne transmission d'informations entre deux noeuds d'accès, du même réseau métropolitain, il est nécessaire de traiter l'ensemble des trafics (trafic intra-réseau et trafic inter-réseaux) au sein du concentrateur inséré sur la fibre du coeur. Cela implique notamment : une étape de démultiplexage de la totalité des signaux optiques circulant dans la fibre du coeur; puis une étape de conversion et de traitement électroniques de l'ensemble des signaux démultiplexés ; pour arriver à la sélection des signaux à re-multiplexer destinés aux noeuds d'accès et non au réseau fédérateur.

Le document FR 2 756 442, qui fonde le préambule de la revendication 1, décrit un autre exemple de réseau métropolitain de télécommunications optiques comprenant un coeur en anneau formé d'une fibre optique dans laquelle est insérée un concentrateur de trafic ainsi que des noeuds principaux de communication. Ce concentrateur de trafic est constitué d'un Multiplexeur à Insertion-Extraction Electronique (en abrégé MIE) qui a les inconvénients mentionnés ci-dessus, découlant de la conversion et du traitement électroniques de l'ensemble des signaux démultiplexés.

EP-A-0 763 909 décrit un réseau en anneau parallèle pouvant être restauré en cas de défaillance d'une fibre optique. Chaque station locale communique avec un commutateur électronique central au moyen d'une longueur d'onde distincte. Un filtre accordable permet de reconfigurer la station locale. La présente invention a pour objet de mettre au point un réseau de type métropolitain capable de gérer de façon simple et peu coûteuse le trafic intra-réseau.

A cet effet, la présente invention propose un réseau de télécommunications optiques, de type métropolitain, comprenant :
- un coeur de type en anneau comportant au moins une fibre optique pour le transport, suivant un sens de propagation donné, de signaux optiques porteurs d'informations,
- des anneaux secondaires, chaque anneau secondaire étant reliés au coeur par des moyens d'insertion de signaux et par des moyens d'extraction de signaux, ces moyens étant insérés dans la fibre du coeur,
- au moins un premier noeud d'accès, dit émetteur, connecté au coeur via un anneau secondaire et via des moyens d'insertion, ce noeud d'accès émetteur comportant des moyens pour émettre des signaux optiques porteurs d'informations,
- au moins un deuxième noeud d'accès, dit destinataire, connecté au coeur via un anneau secondaire et via des moyens d'extraction, ce noeud d'accès destinataire comportant des moyens pour recevoir des signaux optiques porteurs d'informations ;
**caractérisé en ce que :**
- dans chaque noeud d'accès émetteur, les moyens pour émettre des signaux optiques porteurs d'informations utilisent une longueur d'onde appartenant à un groupe de longueurs d'onde dédié à l'anneau secondaire auquel est relié ce noeud d'accès émetteur ;
- dans chaque noeud d'accès destinataire, les moyens pour recevoir sont capables de recevoir toutes les longueurs d'onde utilisées par des noeuds émetteurs du réseau ;
- les moyens d'insertion comportent des moyens entièrement optiques pour insérer, sur la fibre du coeur, des signaux optiques émis par un noeud d'accès émetteur relié à ces moyens d'insertion ;
- et les moyens d'extractions comportent des coupleurs optiques pour prélever dans la fibre du coeur un signal dit représentatif formé d'une fraction de la puissance de chaque signal porteur d'informations, ces coupleurs étant respectivement couplés auxdits moyens pour recevoir, des noeuds destinataires.

Dans le réseau métropolitain ainsi caractérisé, la gestion du trafic intra-réseau est découplée de celle du trafic inter-réseaux ce qui permet d'éviter les traitements électroniques de l'art antérieur qui sont seulement nécessaires à la gestion du trafic inter-réseaux. En effet, les moyens d'insertion et d'extraction de ce réseau permettent à tout noeud d'accès de ce réseau métropolitain de communiquer de manière transparente avec tout autre noeud d'accès du même réseau métropolitain. Un tel réseau métropolitain est donc transparent pour la transmission des signaux optiques intra-réseau. Cela facilite, par exemple, une transmission d'informations entre deux noeuds d'accès éloignés, connectés au coeur via des anneaux secondaires distincts, ou une transmission entre deux noeuds d'accès proches, connectés à un même anneau secondaire.

De manière avantageuse, plusieurs noeuds d'accès émetteurs sont connectés à un même un anneau secondaire, et les longueurs d'onde dédiées aux noeuds émetteurs connectés à un même anneau secondaire sont comprises dans au moins une bande de longueurs d'onde prédéterminée réservée audit anneau secondaire .

Selon un mode de réalisation particulier, pour chaque anneau secondaire les moyens d'insertion pour cet anneau secondaire comprennent :
- un démultiplexeur de bandes de longueurs d'onde, pour démultiplexer par bande les signaux optiques du coeur,
- des moyens pour sélectionner et transmettre des bandes de longueurs d'onde portant des signaux à faire transiter, parmi les bandes démultiplexées par ce multiplexeur,
- des moyens pour sélectionner et éliminer au moins une bande parmi les bandes démultiplexées par ce multiplexeur, afin d'extraire de la fibre du coeur des signaux porteurs d'informations, dans ladite bande réservée,
- des moyens pour recevoir de l'anneau secondaire des signaux porteurs d'informations, dans ladite bande réservée, et qui sont à insérer dans la fibre du coeur, en aval des moyens pour sélectionner et éliminer une bande,
- et un multiplexeur de bandes de longueurs d'onde, pour multiplexer, dans la fibre du coeur, lesdits signaux à insérer et lesdits signaux à faire transiter.
Selon un mode de réalisation particulier :
- les moyens pour sélectionner et éliminer au moins une bande parmi les bandes démultiplexées comprennent un commutateur optique spatial par bande réservée,
- les moyens pour sélectionner et transmettre des bandes de longueurs d'onde portant des signaux à faire transiter comprennent un commutateur optique spatial par bande distincte de ladite bande réservée, et utilisée pour des signaux à faire transiter,
- et les moyens d'insertion comprennent en outre plusieurs atténuateurs optiques variables, disposés respectivement en sortie desdits commutateurs.

De manière avantageuse, un noeud d'accès comprend des moyens pour émettre et recevoir des signaux optiques porteurs d'informations, qui sont entièrement optiques , et capables de fonctionner sur au moins une longueur d'onde dédiée audit noeud d'accès.

De manière avantageuse, chaque noeud d'accès est couplé à un anneau secondaire par des moyens d'extraction d'un signal représentatif, insérés dans cet anneau secondaire.

Selon un mode de réalisation particulier, le réseau selon l'invention comprend en outre un concentrateur de trafic pour la gestion d'informations dites inter-réseaux émises ou à destination d'un réseau fédérateur.

Le réseau métropolitain selon l'invention gère ainsi aussi bien le trafic inter-réseaux que le trafic intra-réseau. Le concentrateur de trafic selon l'invention, inséré dans la fibre par exemple, laisse simplement transiter les informations intra-réseau de manière transparente.

A titre illustratif, un réseau selon l'invention peut comprendre huit noeuds principaux, chacun connectés à un groupe de quatre noeuds d'accès émetteurs et récepteurs. Les quatre noeuds d'accès de chaque groupe émettent des signaux porteurs d'informations intra-réseau à des longueurs d'onde dédiées dans la bande de transmission réservée au noeud principal auquel ils sont connectés et peuvent recevoir les informations intra-réseaux des trente et un autres noeuds d'accès.

Dans cette configuration, des signaux multiplexés à trente-deux longueurs d'ondes sont transportés par la fibre du coeur. Des moyens d'entrelacement peuvent augmenter la capacité de transport de cette fibre.

En outre, chaque signal porteur d'information intra-réseau est par exemple modulé à 10 Gbit/s.

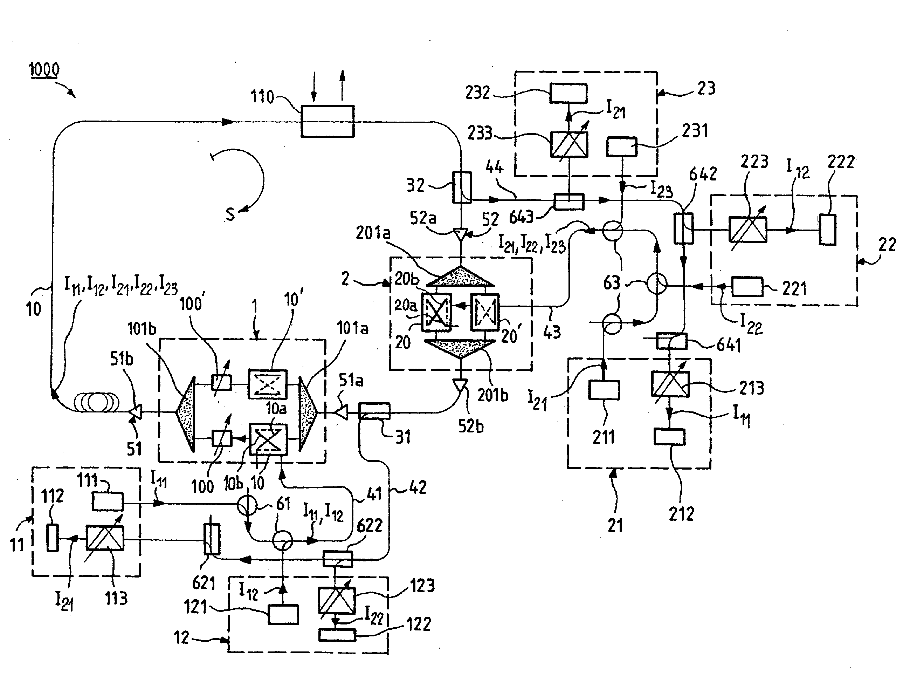

Les caractéristiques et objets de la présente invention ressortiront de la description détaillée donnée ci-après en regard de la figure unique annexée, présentée à titre illustratif et nullement limitatif.

La figure montre un mode de réalisation d'un réseau de télécommunications optiques 1000, de type métropolitain, selon l'invention. Il comprend un coeur, de type en anneau, comportant une fibre optique 10 pour le transport, suivant un sens de propagation donné (voir flèche S), de signaux optiques porteurs d'informations multiplexés en longueurs d'onde.

Deux noeuds principaux de communication 1, 2 sont insérés dans la fibre 10, ainsi qu'un concentrateur de trafic 110 pour la gestion des informations dites inter-réseaux émises ou à destination d'un réseau fédérateur (non représenté).

Le noeud principal 1 est connecté, via un premier anneau secondaire comportant une fibre de liaison 41 et deux mélangeurs optiques 61, à deux noeuds d'accès 11, 12 eux mêmes connectés à des réseaux locaux (non représentés). Chaque noeud d'accès 11, 12 est émetteur et récepteur d'informations intra-réseaux, et comprend :
- des moyens d'émission 111, 121 de signaux optiques porteurs d'informations et de longueur d'onde dédiée λ₁, λ₂ qui est comprise dans une première bande de longueurs d'onde réservée audit noeud principal 1,
- des moyens de réception 112, 122 desdites informations intra-réseaux venant de n'importe quel autre noeud d'accès du réseau métropolitain 1000.

De même, l'autre noeud principal 2 est connecté, via un deuxième anneau secondaire comportant une fibre de liaison 43 et trois mélangeurs optiques 63, connectés à trois noeuds d'accès 21, 22, 23 eux mêmes connectés à des réseaux locaux (non représentés). Chaque noeud d'accès 21 à 23 est émetteur et récepteur d'informations, et comprend :
- des moyens d'émission 211, 221, 231 des signaux optiques porteurs d'informations et de longueur d'onde dédié λ₃, λ₄, λ₅ comprise dans une deuxième bande de longueurs d'onde réservée audit autre noeud principal 2, distincte de la première bande,
- des moyens de réception 212, 222, 232 desdites informations intra-réseaux venant de n'importe quel autre noeud d'accès du réseau.
Le noeud principal 1 comprend selon le sens de propagation dans le coeur :
- un démultiplexeur de bandes de longueurs d'onde 101a pour démultiplexer, suivant les première et deuxième bandes réservées, les signaux porteurs d'informations intra-réseau ayant circulés dans le coeur,
- deux commutateurs optiques spatiaux, 10, 10' à deux états (mode direct de propagation, mode croisé de propagation), placés en parallèles, chacun étant apte à recevoir les signaux démultiplexés de longueurs d'onde dans les première et deuxième bandes réservées respectivement,
- deux atténuateurs optiques variables 100, 100' respectivement disposé en sortie des premier et deuxième commutateurs 10, 10',
- un multiplexeur de bandes de longueur d'onde 101b pour multiplexer les signaux envoyés par chacun des atténuateurs 100, 100'.

Le premier commutateur optique spatial 10 comprend deux branches 10a, 10b positionnées en mode croisé de propagation. La première branche 10a sert à dériver en dehors du coeur les signaux démultiplexés de la première bande réservée. La deuxième branche 10b sert à insérer dans le coeur les signaux de la première bande issus des noeuds d'accès 11, 12 sans les mélanger aux signaux démultiplexés dérivés.

Le deuxième commutateur optique spatial 10' est positionné en mode parallèle de propagation afin d'assurer le transit des signaux optiques qu'il reçoit du démultiplexeur 101a.

L'autre noeud principal 2 possède des moyens de fonctionnement similaires à ceux du noeud principal 1 :
- un démultiplexeur de bandes de longueurs d'onde 201 a,
- un commutateur optique spatial 20 à deux branches 20a, 20b en mode croisé de propagation,
- un commutateur optique spatial 20', en mode parallèle de propagation,
- deux atténuateurs optiques variables (non représentés),
- un multiplexeur de bandes de longueurs d'onde 201 b.

Par ailleurs, deux amplificateurs optiques 51, 52 par exemple à fibre dopée erbium, présentent deux étages 51a à 52b insérés dans la fibre du coeur 10 respectivement de part et d'autre du noeud principal 1 et de part et d'autre de l'autre noeud principal 2.

Des moyens de transmission entièrement optique, à des longueurs d'ondes dédiées, d'informations dites intra-réseau entre des noeuds d'accès émetteurs et récepteurs comprennent :
- les mélangeurs 61, 63 et les moyens d'insertion 10a, 20a,
- des moyens de prélèvement 31, 32 d'un signal représentatif formé d'une fraction de la puissance de chaque signal multiplexé porteur d'informations intra-réseau,
- des moyens d'extraction 621, 622, 641 à 643 d'une fraction de la puissance du signal représentatif,
- des moyens de sélection 113 à 233 des informations intra-réseau,
- les moyens de dérivation 10a, 20a.

Les moyens de prélèvement 31, 32, de type coupleur optique de puissance, sont insérés dans la fibre 10 du coeur respectivement en amont du noeud principal 1 et en amont de l'autre noeud principal 2, par rapport audit sens de propagation dans le coeur.

Ainsi, contrairement à l'art antérieur, le prélèvement d'un signal porteur d'informations intra-réseau destinées à un noeud d'accès n'est pas réalisé par les moyens d'insertion-extraction du noeud principal connectés à ce noeud d'accès récepteur mais en amont de ce noeud principal par rapport au sens de propagation dans le coeur : le réseau selon l'invention est asymétrique par rapport aux commutateurs optiques spatiaux.

Les deux noeud d'accès 11, 12 sont connectés aux moyens 31 via une fibre d'interconnexion 42 du premier anneau secondaire dans laquelle sont insérés deux moyens d'extraction 621, 622 d'une fraction de la puissance du signal représentatif.

Chacun des moyens d'extraction 621, 622 est apte à envoyer le signal extrait à un filtre optique accordable en longueur d'onde 113, 123 du noeud récepteur 11, 12. Les filtres 113, 123 sélectionnent dans les signaux extraits les informations intra-réseau destinées aux moyens de réception 112, 122.

De la même façon, les trois noeuds d'accès 21, 22, 23 sont connectés aux moyens 32 via une fibre d'interconnexion 44 du deuxième anneau secondaire dans laquelle sont insérés trois moyens d'extraction 641 à 643 d'une fraction de la puissance du signal représentatif. Et, de même, chacun des moyens d'extraction 641 à 643 est apte à envoyer le signal extrait à un filtre optique accordable en longueur d'onde 213, 223, 233 du noeud récepteur 21, 22, 23, chaque filtre envoyant les informations intra-réseau sélectionnées aux moyens de réception 212, 222, 232.

La transmission entièrement optique d'informations intra-réseau est représentée à l'aide du trajet des informations intra-réseau l₁₁ l₁₂, l₂₁, l₂₂, l₂₃ respectivement portées par des signaux optiques modulés et de longueurs d'onde dédiées λ₁ à λ₅ émis par les moyens d'émission 111, 121, 211, 221, 231 et reçues par les moyens de réception 112, 122, 212, 222, 232.

Bien entendu, la description qui précède a été donnée à titre purement illustratif. On pourra sans sortir du cadre de l'invention remplacer tout moyen par un moyen équivalent.

Plusieurs longueurs d'onde, voire même une bande de longueurs d'onde, peuvent être dédiée à un noeud d'accès émetteur selon l'invention de sorte que par exemple deux bandes peuvent être réservées au même noeud principal tel que le noeud 1. Dans une configuration (non représentée), une deuxième fibre de liaison comprenant des mélangeurs est employée et connectée à un deuxième commutateur spatial en position croisée de propagation. Dans une autre configuration (non représentée), la fibre de liaison 41 débouche sur un démultiplexeur optique de bandes de longueurs à deux sorties, l'une connectée au commutateur spatial l'autre à un deuxième commutateur spatial similaire.

## Revendications

1. Réseau de télécommunications optiques (1000), de type métropolitain, comprenant :
- un coeur de type en anneau comportant au moins une fibre optique (10) pour le transport, suivant un sens de propagation donné, de signaux optiques porteurs d'informations,
- des anneaux secondaires (41, 42 ; 43, 44), chaque anneau secondaire étant reliés au coeur par des moyens (1, 2) d'insertion de signaux et par des moyens (31, 32) d'extraction de signaux, ces moyens étant insérés dans la fibre (10) du coeur,
- au moins un premier noeud d'accès (11), dit émetteur, connecté au coeur (10) via un anneau secondaire (41, 42) et via des moyens d'insertion (1), ce noeud d'accès émetteur comportant des moyens (111) pour émettre des signaux optiques porteurs d'informations,
- au moins un deuxième noeud d'accès (21), dit destinataire, connecté au coeur (10) via un anneau secondaire (43, 44) et via des moyens d'extraction (32) ce noeud d'accès destinataire comportant des moyens (212) pour recevoir des signaux optiques porteurs d'informations;
- dans chaque noeud d'accès émetteur (11), les moyens (111) pour émettre des signaux optiques porteurs d'informations utilisent une longueur d'onde appartenant à un groupe de longueurs d'onde dédié à l'anneau secondaire (41, 42) auquel est relié ce noeud d'accès émetteur (11) ;
- dans chaque noeud d'accès destinataire (21), les moyens (212) pour recevoir sont capables de recevoir toutes les longueurs d'onde utilisées par des noeuds émetteurs (11) du réseau ;
- les moyens d'insertion (1, 2) comportent des moyens entièrement optiques (100, 101, 10 ; 201, 20) pour insérer, sur la fibre (10) du coeur, des signaux optiques émis par un noeud d'accès émetteur relié à ces moyens d'insertion ;
- les moyens d'extractions (31, 32) comportent des coupleurs optiques pour prélever dans la fibre (10) du coeur un signal dit représentatif formé d'une fraction de la puissance de chaque signal porteur d'informations, ces coupleurs étant respectivement couplés auxdits moyens pour recevoir, des noeuds destinataires
- le réseau en outre comprenant plusieurs noeuds d'accès émetteurs (21 à 23) connectés à un même un anneau secondaire (43 ; 44), tel que les longueurs d'onde dédiées aux noeuds émetteurs connectés à un même anneau secondaire (43 ; 44) sont comprises dans au moins une bande de longueurs d'onde prédéterminée réservée audit anneau secondaire (43 ; 44) ;
**caractérisé en ce que** :
pour chaque anneau secondaire (41, 42 ; 43, 44) les moyens d'insertion (1 ; 2) pour cet anneau secondaire comprennent:
- un démultiplexeur de bandes de longueurs d'onde (101a, 201a), pour démultiplexer par bande les signaux optiques du coeur,
- des moyens (10') pour sélectionner et transmettre des bandes de longueurs d'onde portant des signaux à faire transiter, parmi les bandes démultiplexées par ce démultiplexeur,
- des moyens (10a, 20a) pour sélectionner et éliminer au moins une bande parmi les bandes démultiplexées par ce démultiplexeur, afin d'extraire de la fibre (10) du coeur des signaux porteurs d'informations, dans ladite bande réservée,
- des moyens (10b, 20b) pour recevoir de l'anneau secondaire des signaux porteurs d'informations, dans ladite bande réservée, et qui sont à insérer dans la fibre (10) du coeur, en aval des moyens (10a, 20a) pour sélectionner et éliminer une bande,
- et un multiplexeur de bandes de longueurs d'onde (101b, 201 b), pour multiplexer, dans la fibre (10) du coeur, lesdits signaux à insérer et lesdits signaux à faire transiter.

2. Réseau de télécommunications optiques (1000) selon la revendication 1, **caractérisé en ce que** :
- les moyens pour sélectionner et éliminer au moins une bande parmi les bandes démultiplexées comprennent un commutateur optique spatial (10, 20) par bande réservée,
- les moyens pour sélectionner et transmettre des bandes de longueurs d'onde portant des signaux à faire transiter comprennent un commutateur optique spatial (10', 20') par bande distincte de ladite bande réservée, et utilisée pour des signaux à faire transiter,
- et les moyens d'insertion comprennent en outre plusieurs atténuateurs optiques variables (100 à 200'), disposés respectivement en sortie desdits commutateurs.

3. Réseau de télécommunications optiques (1000) selon la revendication 1 **caractérisé en ce qu'**un noeud d'accès (11 à 23) comprend des moyens pour émettre et recevoir des signaux optiques porteurs d'informations, qui sont entièrement optiques (61, 63, 621, 622, 641 à 643, 113 à 223), et capables de fonctionner sur au moins une longueur d'onde dédiée audit noeud d'accès.

4. Réseau de télécommunications optiques (1000) selon la revendication 1 **caractérisé en ce que**, dans un noeud d'accès (11 à 23), les moyens pour recevoir des signaux optiques porteurs d'informations, comprennent des moyens (113, 123, 223, 233) de sélection des longueurs d'onde reçues.

5. Réseau de télécommunications optiques (1000) selon la revendication 4 **caractérisé en ce que** ces moyens de sélection sont accordables en longueur d'onde.

6. Réseau de télécommunications optiques (1000) selon la revendication 1, **caractérisé en ce que** chaque noeud d'accès (11 à 23) est couplé à un anneau secondaire par des moyens d'extraction (621 à 643) d'un signal représentatif, insérés dans cet anneau secondaire (43, 44).

7. Réseau de télécommunications optiques (1000) selon l'une des revendications précédentes, **caractérisé en ce qu'**il comprend en outre un concentrateur de trafic (110) pour la gestion d' informations dites inter-réseaux émises ou à destination d'un réseau fédérateur.

## Patentansprüche

1. Optisches Telekommunikationsnetzwerk (1000), beispielsweise zur Abdeckung des Kommunikationsbedarfs innerhalb von Städten und Ballungsgebieten, umfassend:
- Einen ringartigen Kern mit mindestens einer optischen Faser (10) für den Transport, gemäß einer gegebenen Ausbreitungsrichtung, von informationstragenden optischen Signalen,
- sekundäre Ringe (41, 42; 43, 44), wobei jeder sekundäre Ring anhand von Mitteln (1, 2) zum Einfügen von Signalen und Mitteln (31, 32) zum Extrahieren von Signalen mit dem Kern verbunden ist, wobei diese Mittel in der Faser (10) des Kerns enthalten sind,
- mindestens einen ersten sogenannten Sende-Zugangsknoten (11), welcher über einen sekundären Ring (41, 42) und über Einfügemittel (1) mit dem Kern (10) verbunden ist, wobei dieser Sende-Zugangsknoten Mittel (111) zum Ausgeben von informationstragenden optischen Signalen umfasst,
- mindestens einen zweiten sogenannten Ziel-Zugangsknoten (21), welcher über einen sekundären Ring (43, 44) und über Extraktionsmittel (32) mit dem Kern (10) verbunden ist, wobei dieser Ziel-Zugangsknoten Mittel (212) zum Empfangen von informationstragenden optischen Signalen umfasst;
- wobei, in jedem Sende-Zugangsknoten (11), die Mittel (111) zum Ausgeben von informationstragenden optischen Signalen eine Wellenlänge, die einer Gruppe von dem sekundären Ring (41, 42), mit welchem dieser Sende-Zugangsknoten (11) verbunden ist, zugeordneten Wellenlängen angehört, verwenden;
- wobei, in jedem Ziel-Zugangsknoten (21), die Mittel (212) zum Empfangen fähig sind, alle von Sendeknoten (11) des Netzwerks verwendeten Wellenlängen zu empfangen;
- wobei die Einfügemittel (1, 2) vollständig optische Mittel (100, 101, 10; 201, 20) umfassen, um auf der Faser (10) des Kerns von einem Sende-Zugangsknoten, welcher mit diesen Einfügemitteln verbunden ist, ausgegebene optische Signale einzufügen;
- wobei die Extraktionsmittel (31, 32) optische Koppler umfassen, um in der Faser (10) des Kerns ein sogenanntes repräsentatives Signal, welches aus einem Bruchteil der Leistung eines jeden informationstragenden Signals gebildet wird, zu entnehmen, wobei diese Koppler jeweils an die besagten Mittel zum Empfangen der Ziel-Knoten gekoppelt sind,
- wobei das Netzwerk weiterhin mehrere Sende-Zugangsknoten (21 bis 23) umfasst, welche mit einem selben sekundären Ring (43; 44) verbunden sind, so dass die Wellenlängen, die den mit einem selben sekundären Ring (43; 43) verbundenen Sendeknoten zugeordnet sind, in mindestens einem vorbestimmten, für den besagten sekundären Ring (43; 44) reservierten Wellenlängenband enthalten sind;
**dadurch gekennzeichnet, dass**:
für jeden sekundären Ring (41, 42; 43, 44) die Einfügemittel (1; 2) für diesen sekundären Ring umfassen:
- einen Wellenlängenband-Demultiplexer (101 a, 201 a), um die optischen Signale des Kerns pro Band zu demultiplexen,
- Mittel (10') zum Auswählen und Übertragen von Wellenlängenbändern, welche zu befördernde Signale tragen, unter den von diesem Demultiplexer demultiplexten Bändern,
- Mittel (10a, 20a) zum Auswählen und Eliminieren mindestens eines Bandes unter den von diesem Demultiplexer demultiplexten Bändern, um aus der Faser (10) des Kerns informationstragende Signale zu extrahieren, in dem besagten reservierten Band,
- Mittel (10b, 20b) zum Empfangen, von dem sekundären Ring, von informationstragenden Signalen in dem besagten reservierten Band, welche in die Faser (10) des Kerns, stromabwärts der Mittel (10a, 20a), einzufügen sind, um ein Band auszuwählen und zu eliminieren,
- und einen Wellenlängenband-Multiplexer (101 b, 201 b) zum Multiplexen, in der Faser (10) des Kerns, der besagten einzufügenden Signale und der besagten zu befördernden Signale.

2. Optisches Telekommunikationsnetzwerk (1000) nach Anspruch 1, **dadurch gekennzeichnet, dass**:
- die Mittel zum Auswählen und Eliminieren mindestens eines Bandes unter den demultiplexten Bändern einen optischen Raumschalter (10, 20) pro reserviertem Band umfassen,
- die Mittel zum Auswählen und Übertragen der Wellenlängenbänder, welche zu befördernde Signale tragen, einen optischen Raumschalter (10', 20') pro sich von dem besagten reservierten Band unterscheidendes und für die zu befördernden Signale verwendetes Band umfassen,
- und die Einfügemittel weiterhin mehrere regelbare optische Dämpfungsglieder (100 bis 200'), welche jeweils am Ausgang der besagten Schalter angeordnet sind, umfassen.

3. Optisches Telekommunikationsnetzwerk (1000) nach Anspruch 1, **dadurch gekennzeichnet, dass** ein Zugangsknoten (11 bis 23) Mittel zum Ausgeben und Empfangen von informationstragenden optischen Signalen umfasst, welche vollständig optisch (61, 63, 621, 622, 641 bis 643, 113 bis 223) und fähig sind, auf mindestens einer dem besagten Zugangsknoten zugeordneten Wellenlänge betrieben zu werden.

4. Optisches Telekommunikationsnetzwerk (1000) nach Anspruch 1, **dadurch gekennzeichnet, dass**, in einem Zugangsknoten (11 bis 23), die Mittel zum Empfangen von informationstragenden optischen Signalen Mittel (113, 123, 223, 233) zum Auswählen der empfangenen Wellenlängen umfassen.

5. Optisches Telekommunikationsnetzwerk (1000) nach Anspruch 4, **dadurch gekennzeichnet, dass** die Mittel zum Auswählen in der Wellenlänge abgestimmt werden können.

6. Optisches Telekommunikationsnetzwerk (1000) nach Anspruch 1, **dadurch gekennzeichnet, dass** jeder Zugangsknoten (11 bis 23) an einen sekundären Ring anhand von Mitteln (621 bis 643) zum Extrahieren eines repräsentativen Signals, welche in diesem sekundären Ring (43, 44) enthalten sind, gekoppelt ist.

7. Optisches Telekommunikationsnetzwerk (1000) nach einem der vorstehenden Ansprüche, **dadurch gekennzeichnet, dass** es weiterhin einen Verkehrskonzentrator (110) für die Verwaltung von sogenannten netzwerkübergreifenden Informationen, die von einem Backbone-Netzwerk ausgegeben werden oder an dieses gerichtet sind, umfasst.

## Claims

1. An optical telecommunications network (1000), of the metropolitan type, comprising:
- a core of the ring type comprising at least one optical fiber (10) for transporting, in a given direction of propagation, optical signals that carry information.
- secondary rings (41, 42 ; 43, 44), each secondary ring being connected to the core by means (1, 2) of inserting signals and by means (31, 32) of extracting signals, those means being inserted into the fiber (10) of the core,
- at least one first access network (11), said to be transmitting, connected to the core (10) via a secondary ring (41, 42) and via means of insertion (1), that transmitting access network comprising means (111) for transmitting optical signals that carry information,
- at least one access network (21), said to be receiving, connected to the core (10) via a secondary ring (43, 44) and via means of extraction (32), that receiving access network comprising means (212) for receiving optical signals that carry information;
- within each transmitting access node (11), the means (111) for transmitting optical signals that carry information use a wavelength belonging to a group of wavelengths dedicated to the secondary ring (41, 42) to which that transmitting access node is connected (11);
- in each receiving access node (21), the means (212) for receiving are capable of receiving all wavelengths used by the transmitting nodes (11) of the network;
- the means of insertion (1, 2) comprise entirely optical means (100, 101, 10 ; 201, 20) for inserting, in the fiber (10) of the core, optical signals transmitted by an transmitting access mode connected to those means of insertion;
- the means of extraction (31, 32) comprise optical couplers for collecting in the fiber (10) of the core a signal that is said to be representative, formed of a fraction of the power of each signal that carries information, those couplers being respectively coupled to said means for receiving, of said receiving nodes.
- the network further comprises a plurality of transmitting access nodes (21 to 23) connected to a single secondary ring (43; 44), such that the wavelengths dedicated to the transmitting nodes connected to a single secondary ring (43; 44) are comprised within at least one predetermined band of wavelengths reserved for said secondary ring (43; 44);
**characterized in that**:
for each secondary ring (41, 42 ; 43, 44) the means of insertion (1; 2) for that secondary ring comprise:
- a wavelength band demultiplexer (101 a, 201 a), for demultiplexing into bands the optical signals of the core,
- means (10') for selecting and transmitting wavelength bands carrying signals to be transported, from among the bands demultiplexed by that demultiplexer,
- means (10a, 20a) for selecting and eliminating at least one band from among the bands demultiplexed by that demultiplexer, in order to extract from the fiber (10) of the core signals that carry information, within said reserved band,
- means (10b, 20b) for receiving from the secondary ring signals that carry information, within said reserved band, and which are to be inserted into the fiber (10) of the core, downstream of the means (10a, 20a) for selecting and eliminating a band,
- and a wavelength band demultiplexer (101 b, 201 b), for multiplexing, in the fiber (10) of the core, said signals to be inserted and said signals to be transported.

2. Optical telecommunications network (1000) according to claim 1, **characterized in that**:
- the means for selecting and eliminating at least one band from among the demultiplexed bands comprise a spatial optical switch (10, 20) for each reserved band,
- the means for selecting and transmitting wavelength bands that carry signals to be transported comprise a spatial optical switch (10', 20') for each distinct band of said reserved band, used for signals to be transported,
- and the means of insertion further comprise multiple variable optical attenuators (100 to 200'), respectively disposed at the output of said switches.

3. An optical telecommunications network (1000) according to claim 1 **characterized in that** an access node (11 to 23) comprises means for transmitting and receiving optical signals that carry information, which are entirely optical (61, 63, 621, 622, 641 to 643, 113 to 223), and capable of operating on at least one wavelength dedicated to said access node.

4. An optical telecommunications network (1000) according to claim 1 **characterized in that**, in an access node (11 to 23), the means for receiving optical signals that carry information, comprise means (113, 123, 223, 233) for selecting the received wavelengths.

5. An optical telecommunications network (1000) according to claim 4 **characterized in that** those means of selection are wavelength-tunable.

6. An optical telecommunications network (1000) according to claim 1 **characterized in that** each access node (11 to 23) is coupled to a secondary ring by means for extracting (621 to 643) a representative signal, inserted into that secondary ring (43, 44).

7. An optical telecommunications network (1000) according to one of the preceding claims, **characterized in that** it further comprises a traffic hub (110) for managing so-called inter-network information transmitted from or to a unifying network.
